Europäisches Patentamt

European Patent Office

Office européen des brevets

(11) Veröffentlichungsnummer: **0 268 965 B1**

# EUROPÄISCHE PATENTSCHRIFT

(45) Veröffentlichungstag der Patentschrift: **18.09.91**

(51) Int. Cl.⁵: **B65G 1/04**

(21) Anmeldenummer: **87116842.3**

(22) Anmeldetag: **14.11.87**

(54) Lagereinrichtung.

(30) Priorität: **20.11.86 DE 3639649**

(43) Veröffentlichungstag der Anmeldung:
**01.06.88 Patentblatt 88/22**

(45) Bekanntmachung des Hinweises auf die
Patenterteilung:
**18.09.91 Patentblatt 91/38**

(84) Benannte Vertragsstaaten:
**AT CH DE ES FR GB IT LI SE**

(56) Entgegenhaltungen:
**WO-A-81/03653**
**WO-A-85/03495**
**DE-A- 3 003 628**
**DE-A- 3 433 736**
**DE-U- 8 410 376**

**MATERIALS HANDLING NEWS, Nr. 312, Dezember 1983, Seite 38, Dunstable, Bedfordshire, GB; "Automated storage - Appledore on
the integrated path"**

**PATENT ABSTRACTS OF JAPAN, Band 7, Nr.
244 (M-252)[1389] 28. Oktober 1983; & JP - A -
58 130 804 (MISA SAKAMOTO)04.08.1983**

(73) Patentinhaber: **TEPORA Transportsysteme
Entwicklungs-GmbH
Im Brühl 50
W-7128 Lauffen/Neckar(DE)**

(72) Erfinder: **Potocnjak, Tomislav
Neckarstrasse 64/1
W-7128 Lauffen/Neckar(DE)**

(74) Vertreter: **Jackisch, Walter, Dipl.-Ing. et al
Patentanwalt W. Jackisch & Partner Menzelstrasse 40
W-7000 Stuttgart 1(DE)**

## Beschreibung

Die Erfindung betrifft eine Lagereinrichtung mit den Merkmalen des Oberbegriffs des Anspruchs 1.

Für die moderne Lagerhaltung werden verschiedene Hochregal-Systeme angeboten. Diese Lagersysteme sind zumeist auf bestimmte Warenbehälter abgestimmt, wie Paletten, Gitterboxen, Langgutkassetten, Blechpaletten und dergleichen. Selbst bei Massenartikeln, wie z.B. Auto-Ersatzteilen, besteht das Problem, daß nicht alle Artikel in ein und demselben Regal untergebracht und von ein und demselben Bediengerät ein- und ausgelagert werden können, weil die Abmessungen zu verschieden sind. So können z.B. Benzinpumpen in Gitterboxen gelagert werden, während die Dächer für Lieferwagen aufgrund der großen Ausmaße in einem extra Lager zu deponieren sind. Oftmals ist es notwendig, drei oder mehr Lagersysteme einzurichten, z.B. für Kleinmaterial, für Bleche und für Langgut, was jedoch vor allem bei mittelgroßen Betrieben zu einer verhältnismäßig hohen Kostenbelastung führen kann, insbesondere dann, wenn es sich bei den jeweiligen Lagergütern um relativ geringe Mengen handelt.

Aus der DE-A 30 03 628 ist eine gattungsgemäße Lagereinrichtung bekannt, bei der die Traverse horizontal und vertikal verfahrbar ist und eine Vielzahl von Lagergutaufnehmern aufweist, die einzeln, in Gruppen oder alle gemeinsam quer zur Traversenlängsrichtung verfahrbar sind. Soll mit einer derartigen Traverse bei einer Fahrt unterschiedliches Langgut von unterschiedlichen Lagerplätzen entnommen werden, treten erhebliche Probleme auf. Sind z.B. die in Fahrtrichtung vorne liegenden Lagergutaufnehmer mit Materialgut belegt und soll von dem in Fahrtrichtung vordersten Lagerplatz weiteres Lagergut aufgenommen werden, muß die Traverse um eine entsprechende Länge aus dem Regelgang herausfahren können. Neben dem Raumbedarf für das Regallager selbst sind daher noch Fahrbereiche an den stirnseitigen Enden der Regalgänge vorzusehen. Je länger die Traverse ist, desto breiter müssen die Fahrbereiche vorgesehen werden.

Ferner muß bei der bekannten Traverse im Regallager selbst ein Rollgang integriert sein, auf dem das abzuziehende Lagergut zur Entnahme abzulegen ist. Der Rollgang selbst mindert dabei die mögliche Lagerfläche im Regallager. Zwar wäre auch ein Rollgang außerhalb des Regalllagers möglich, hierbei würde jedoch zusätzlicher Raum für den Rollgang als auch für den vorzusehenden Fahrbereich benötigt.

Die DE-A 34 33 736 zeigt eine der DE-A 30 03 628 ähnliche Lagereinrichtung, bei der aufgrund des Aufbaus ebenfalls ein erheblicher Platzbedarf gegeben ist.

Aus der Literaturstelle "MATERIALS HANDLING News" ist eine Lagereinrichtung bekannt, bei der anstelle eines Regalfaches im Regallager ein Rollgang als Abgabefach angeordnet ist. Hierdurch geht Lagerfläche verloren, insbesondere dann, wenn an mehreren Stellen und/oder in mehreren Ebenen Übergabepunkte vorgesehen sein sollen.

Die Lagereinrichtung für Paletten gemäß WO 81/03653 zeigt eine Traverse mit einem quer zur Traversenlängsrichtung liegenden Rollgang, der als Entnahmeorgan zur Aufnahme oder Abgabe einer Palette dient. Zur Abgabe einer aufgenommenen Palette muß die Traverse aber aus dem Regallager herausfahren oder einen Abrollgang im Regallager selbst anfahren.

Der Erfindung liegt die Aufgabe zugrunde, eine Lagereinrichtung aus einem Regallager und einer zur Ein- und Auslagerung des Lagergutes vorgesehene Traverse mit Lagergutaufnehmern derart auszubilden, daß bei geringem Platzbedarf für das Regallager und maximaler Ausnutzung der möglichen Regallagerfläche die Traverse bei einer Fahrt Lagergut aus mehreren Lagerfächern aufnehmen und in beliebiger vertikaler Höhe abgeben kann, ohne aus dem Regallager auszufahren.

Diese Aufgabe wird mit den Merkmalen des Anspruches 1 gelöst.

Durch die Abstimmung des Regalrasters und die Zuordnung von mindestens zwei Lagergutaufnehmern pro Lagerfach ist prinzipiell die Möglichkeit gegeben, Lagergut unterschiedlicher Längen im Regal abzulegen bzw. aufzunehmen. Die hierzu entsprechend ausgebildete Traverse weist einen Rollgang auf, dessen Förderrollen über einen Motor abschnittsweise antreibbar sind. Der Rollgang ist relativ zur Traverse heb-und senkbar, so daß das Lagergut entweder auf dem Rollgang oder den Lagergutaufnehmern liegt.

Soll nun bei einer einzigen Fahrt Lagergut aus mehreren Lagerfächern entnommen werden, sind durch die mögliche Verlagerung des entnommenen Lagergutes auf der Traverse mittels des abschnittsweise antreibbaren Rollgangs die jeweils benötigten Lagergutaufnehmer jederzeit freizumachen. Ein Herausfahren der Traverse aus dem Regalgang ist nicht erforderlich, so daß der Platzbedarf der Lagereinrichtung auf den Platzbedarf des Regallagers selbst begrenzt ist. Fahrbereiche neben dem Regal können vollständig entfallen.

Da zudem die Abgabe des entnommenen Materialgutes durch den Rollgang der Traverse auf beliebiger vertikaler Höhe erfolgen kann, sind im Regallager selbst Rollgänge nicht erforderlich, so daß die gesamte mögliche Lagerfläche des Regallagers zur Einlagerung von Materialgut benutzt werden kann. Dennoch ist aufgrund der erfindungsgemäß gestalteten Traverse eine Abgabe des Lagergutes auf verschiedenen Etagen des Regallagers möglich.

Weiterbildungen sopwie Vorteile der Erfindung sind den weiteren Ansprüchen, der Beschreibung und der Zeichnung zu entnehmen, die in schematischer Darstellung bevorzugte Ausführungsformen der Erfindung zeigt. Es stellen dar:

FIG. 1    eine erfindungsgemäße Lagereinrichtung mit einem Blockregal und einem über diesem verfahrbaren Hebezeug mit einer Traverse zum Ein- und Auslagern des Lagerguts in Seitenansicht,

FIG. 2    die Lagereinrichtung gemäß FIG. 1 in Draufsicht,

FIG. 3    die Traverse des Hebezeugs gemäß FIG. 1 und 2 mit einem über einen Antrieb der ausfahrbaren Teleskopausleger in (geschnittener) Seitenansicht,

FIG. 4    ein Tragarm des Regals der Lagereinrichtung mit einer Auflage für Einzelstäbe in Seitenansicht,

FIG. 5    ein Teil des Regals der Lagereinrichtung mit einem integrierten Abgabe- und Aufnahmefach in Seitenansicht,

FIG. 6    das Regal der Lagereinrichtung gemäß FIG. 5 mit eingebautem Querrollgang in Vorderansicht und

FIG. 7    die Traverse des Hebezeugs der Lagereinrichtung mit einem Rollgang für das Lagergut in Vorderansicht.

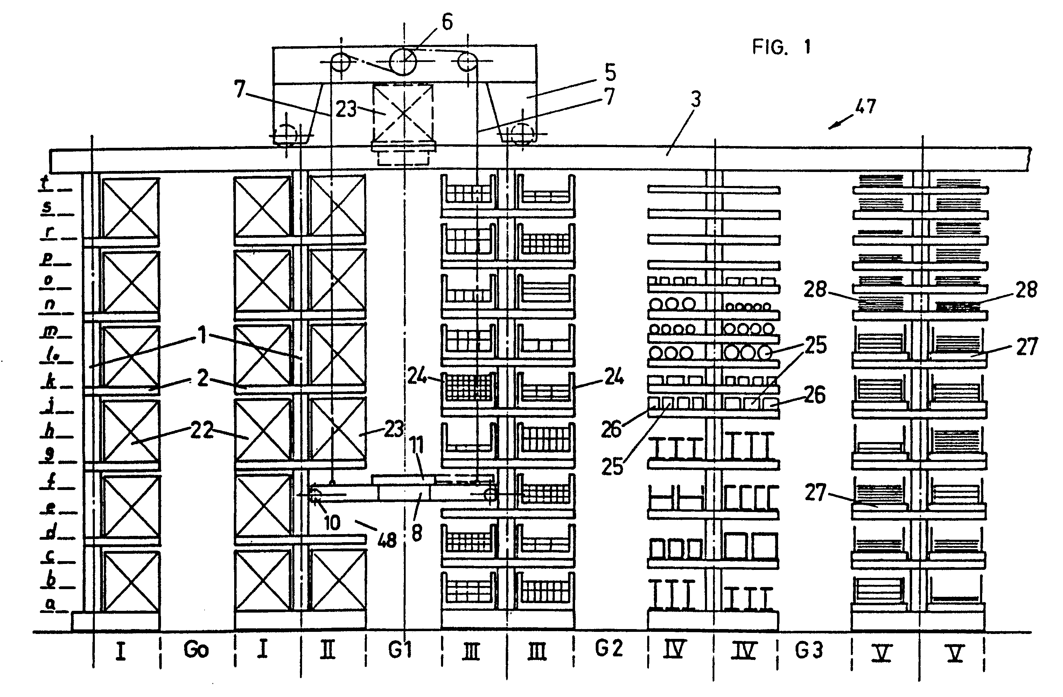

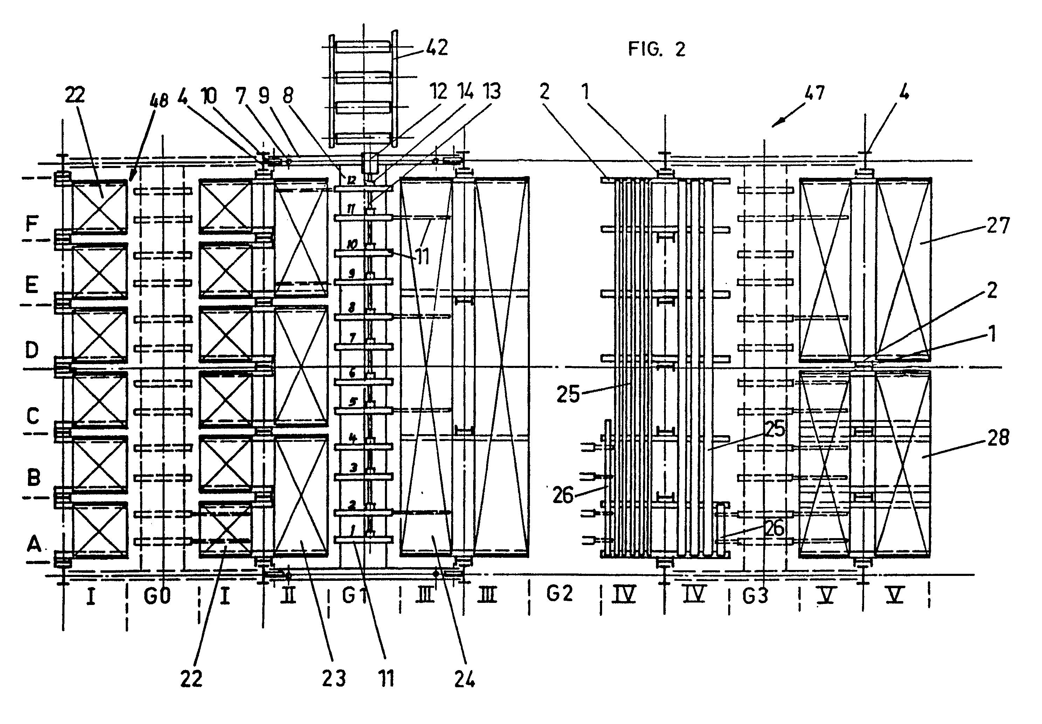

Die erfindungsgemäße Lagereinrichtung weist einen Regalblock 47 mit Lagerfächern 48 auf, die nach einem bestimmten Raster A/B/C/D/E/F in Längsrichtung ausgeführt sind. Das Raster A bis F für die Feldbreite der Lagerfächer 48 ist so gewählt worden, daß das längste unterzubringende Lagergut bzw. die längste Palette ein mehrfaches der Länge des kleinsten Lagerfachs 48 bzw. des Rasters A bis F ist. Der Regalblock 47 weist vertikale Ständer 1 mit horizontal abstrebenden Tragarmen 3 auf. Unter den FIG. 1 und 2 ist die horizontale Teilung des Regalblocks 47 mit den Ablageflächen I,II,III,IV,V,VI (auf den Tragarmen 2) sowie den Regalgängen G0,G1,G2,G3 angedeutet. In FIG. 1 ist an der linken Seite die Höhenteilung von a bis t angezeigt. Eine Höhenteilung entspricht der Höhe des niedrigsten Lagerfachs. Jedes Lagerfach kann die mehrfache Höhe des Grundfachs haben.

Über dem Regalblock 47 ist ein Hebezeug 5 vorgesehen, das auf Schienen 3 verfahrbar ist, die den oberen Abschluß des Regalblocks 47 bilden. Das Hebezeug 5 weist eine Hubwinde 6 auf, mittels der Seile 7 auf- und abwickelbar sind, an denen eine in den Regalgängen G0 bis G3 vertikal auf- und abfahrbare Traverse 8 angehängt ist.

Der Draufsicht gemäß FIG. 2 ist das Raster A bis F in Längsrichtung der Lagerfächer 48 zu entnehmen. Zudem ist zu erkennen, daß die an den Seilen 7 hängende Traverse 8 über Querträger 9, die an den Traversenenden außerhalb des Regalgangs angeordnet sind, an äußeren vertikalen Regalstützen 4 mittels Rollen 10 geführt ist.

Eine wesentliche Besonderheit der erfindungsgemäßen Lagereinrichtung besteht darin, daß zu jeder Lagerfach-Grundlängeneinheit (Raster) A/B/C/D/E/F ein quer zur Traversenlängsrichtung in die Lagerfächer 48 ein- und ausfahrbarer Lagergutaufnehmer vorgesehen ist, der in bevorzugter Ausführung als Teleskopausleger 11 ausgebildet ist. Die Teleskopausleger 11 sind für jedes Raster A bis F wahlweise vorgesehen und können in zueinander entgegengesetzten Richtungen nach beiden Seiten der Traverse 8 ein- und ausgefahren werden. Sämtliche Teleskopausleger 11 können von einem einzigen Getriebemotor 12 über eine Synchronwelle 13 angetrieben werden. Die Teleskopausleger 11 können über eine Kupplung 14, einen Zahnriementrieb 15,16,17, Zahnrädern 18 und einer Zahnlatte 19 je nach Bedarf wahlweise zu oder abgeschaltet werden. Die Kupplung 14 kann eine fernbetätigte Schaltkupplung oder zweckmäßig als Magnetkupplung ausgeführt sein.

Bei der vorbeschriebenen Grundanordnung kann die flächenmäßig kleinste Einheit eine Standardpalette oder ein Gitterkorb 22 mit der durch die Felder "I" und "A" begrenzten Fläche und einer Höhe von z.B. "a-c" (FIG. 1) sein. Zwischen den jeweils benachbarten Lagerfächern 48 bzw. den Raster A bis F befindet sich ein Regalständer 1 mit den Tragarmen 2. Die nächst größere Einheit wäre z.B. eine mit den Feldern "II" und "A/B" (FIG.2) beschriebene Palette 23 mit der Höhe "a bis c" (FIG. 1). Die Anzahl der Ständer 1 wäre hier bedeutend geringer.

Für die Unterbringung des Langgutes kann eine Kassette 24 geeignet sein, die als die Fläche mit den Feldern "III" und "A bis F" (FIG. 2) beschrieben wird und eine Höhe von z.B. zwei Feldern, also "a/b" (FIG. 1) hat. Da die Kassette 24 eine gewisse Eigensteifigkeit besitzt, kann es genügen, wenn nur jeder zweite oder dritte Ständer 1 mit Tragarmen 2 vorhanden wäre.

Eine weitere Möglichkeit zur Unterbringung des Langguts ist die Lagerung von Einzelstäben 25 im Regalblock 47, wie dies in FIG. 2 in den Feldern "IV" und "A bis F" angedeutet ist. Das kürzeste Reststück 26, das noch gelagert werden kann, hat die Länge der Grundbreite "A". Zur Lagerung der langen Einzelstäbe 25 kann es zweckmäßig sein, daß sowohl die entsprechenden Tragarme 2 als auch die Teleskopausleger 11 eine Zähne 20 und Zahnlücken 21 aufweisende Auflagefläche besitzen, die das Abrollen der Einzelstäbe 25 verhindern. Die Lagerfächer 48 können dabei verschiedene Höhen haben, z.B. nur die Höhe "n" oder die Höhe "c/d" im Längsfeld 'IV' (FIG. 1), je nach dem, ob es sich um die Lagerung von Kleinstäben oder um große Vierkantrohre oder dergleichen handelt.

Für das Lagern von Blechen kann eine Blechpalette 27 zweckmäßig sein, die gemäß FIG. 2 mit den Feldern "V" und "D/F" bezeichnet ist und auf nur zwei Regalständern 1 abgelegt werden kann. Darüber hinaus kann es auch günstig sein, Bleche ohne irgend eine Palette zu lagern, wie dies gemäß FIG. 2 in den Feldern "V" und "A/C" gezeigt ist. Hierbei kann es zweckmäßig sein, den Abstand der Regalständer 1 gemäß dem Raster möglichst klein zu wählen, um die Blechdurchbiegung klein zu halten.

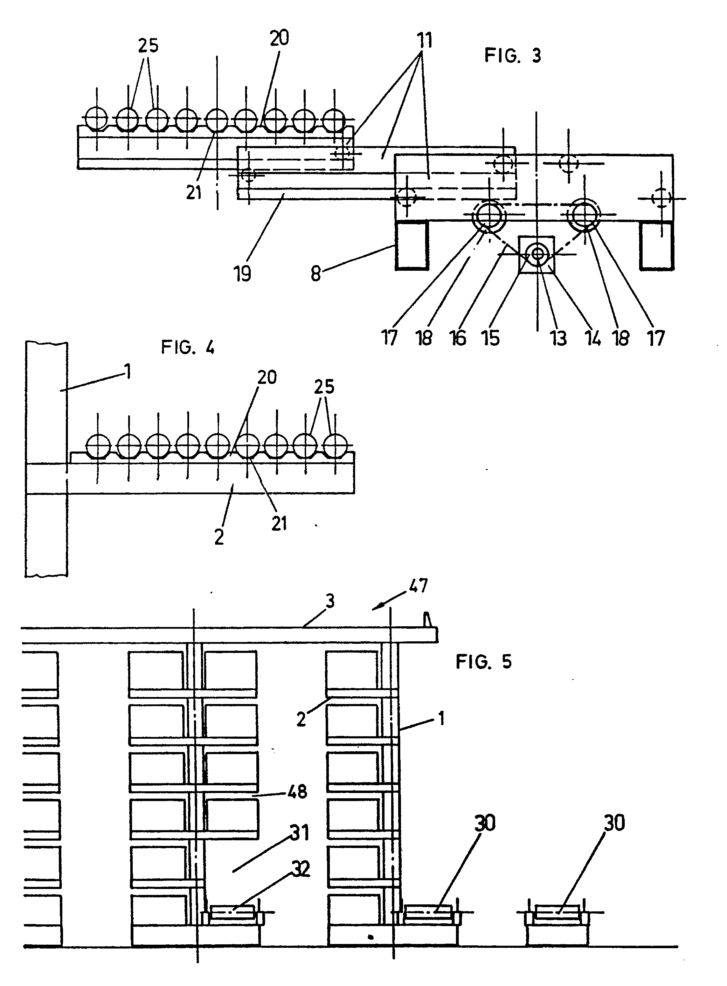

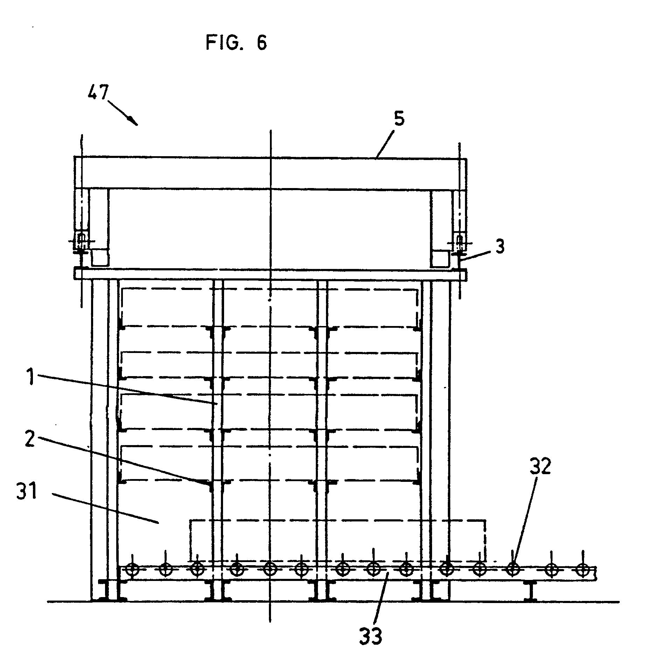

Die Abgabe des Lagerguts bzw. Palette kann außerhalb des Regals erfolgen, indem entweder mit dem Hebezeug 5 die Traverse 8 in die höchste Stellung gehoben wird und vor den Regalblock (vorn oder hinten) gefahren wird und dort auf einen Abgabetisch/Rollgang 30 (FIG. 5) abgegeben wird, oder daß mit der Traverse 8 ein Abgabefach 31 im Regalblock 47, das mit einem Querrollgang 32 ausgestattet ist, angefahren und dort die Last/Palette auf den Rollgang abgegeben wird. Über den Querrollgang 32 kann das Lagergut zur Seite ausgeschleust werden. Ein derartiges Verfahren für eine seitliche Palettenabgabe beim Langgut kann eine Einschränkung der Flexibilität der erfindungsgemäßen Lagereinrichtung bewirken, da die Abgabe- /Aufnahmefächer 31 schon bei der Planung der Lagereinrichtung festgelegt werden müssen, und zwar nur dort, wo das Regal die geringste Breitenteilung der Regalständer 1 hat, z.B. gemäß FIG. 2 im Feld "I", da sonst der Rollenträger 33 des Querrollgangs 32 ausgewöhnlich kräftig dimensioniert werden müßte (FIG. 6).

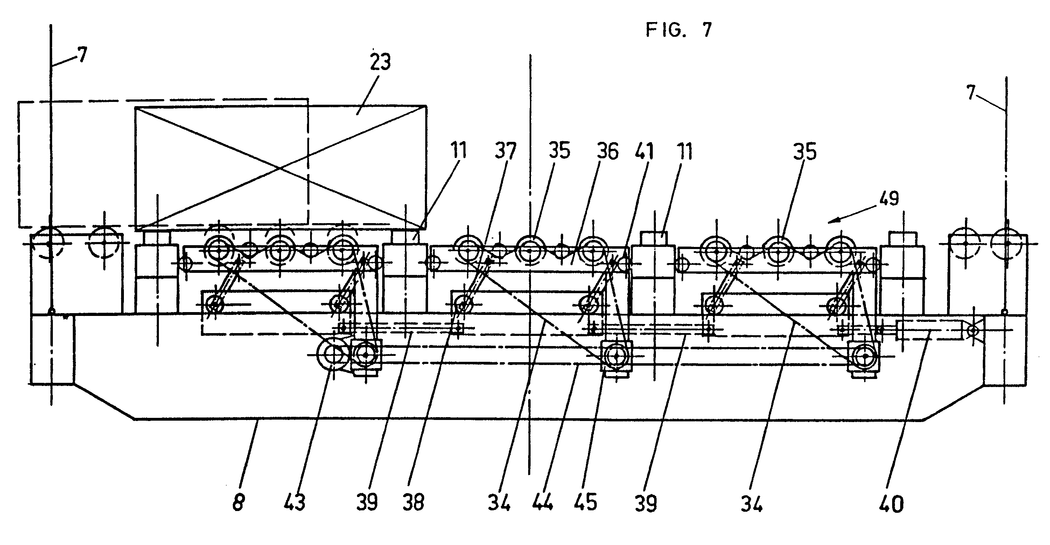

Aus diesem Grund kann bei der erfindungsgemäßen Lagereinrichtung zweckmäßig ein auf der Traverse 8 heb- und senkbarer Rollgang 49 (FIG. 7) vorgesehen sein. Dabei können über eine Antriebskette 34 die Förderrollen 35, die an mehreren zwischen den Teleskopauslegern 11 untergebrachten Rahmen 36 angebracht sind, von einem Rollgangmotor 43 so angetrieben werden, daß sie über eine Kette 44 und Elektrokupplungen 45 abschnittsweise zugeschaltet werden können.

Die Rahmen 36 können zweckmäßig über Hebel 37 mit Hubrollen 38, die miteinander mit Zugstangen 39 verbunden sind, so betätigbar sein, daß sich beim Erzeugen einer Zugkraft über einen Antrieb 40, der als Hydraulikzylinder oder Exzenter-Antrieb ausgeführt sein kann, die Rahmen 36 von den schräggestellten Hebeln 37 und Hubrollen 38 nach oben bewegen. Die Rahmen 36 stützen sich dabei mit den Rollen 41 an den Anschlägen ab, die an den Teleskopauslegern 11 befestigt sind.

Die Entnahme einer Palette aus dem Regal kann dabei wie folgt durchgeführt werden. Die Traverse 8 wird etwas unterhalb der Palette 22 positioniert, der Teleskopausleger 11 fährt zur Seite aus (in das Regal), die Traverse 8 wird angehoben und der Teleskopausleger 11 zurück zur Mitte der Traverse 8 gefahren. Die Traverse 8 wird sodann mit Hilfe des Hebezeugs 5 zur gewünschten Position im Regal verfahren. Mit dem Zugglied 40 werden die Zugstangen 39 angezogen, der Rahmen 36 mit den Förderrollen 35 und der Palette wird dadurch angehoben. Mit dem Rollgangmotor 43 wird die Palette auf den angetriebenen Rollen 35 zur Seite auf den sich außerhalb befindlichen Abrollgang 42 gefahren.

Die erfindungsgemäße Lagereinrichtung bietet verschiedene Vorteile. Beim Lagern von Massenwaren erreicht das herkömmliche Regalbediengerät immer nur eine Position im Regal. Bei der Entnahme von großen Mengen gleichartiger Waren muß das Regalbediengerät jede Palette einzeln herausholen. Bei der erfindungsgemäßen Lagereinrichtung können bis zu fünf oder sechs Paletten auf einmal entnommen werden. Die Lagereinrichtung eignet sich demnach besonders günstig zur Lagerung von Massengütern mit geringer Systemzahl.

Durch die lange, mit einem Querrollgang ausgestattete Traverse 8 ist es möglich, während einer Fahrt eine ganze, z.B. aus fünf oder sechs Paletten bestehende Kommission aus verschiedenen Waren zu bilden. Dadurch können Fahrzeiten eingespart und die Annahme/Abgabestelle entlastet werden.

Die Entnahme und das Auffüllen des Regals geschieht bei herkömmlichen Regalanlagen am Ende der Regalgasse. Die erfindungsgemäße Möglichkeit, die Waren seitlich herauszugeben und wieder aufzunehmen, dazu an beliebiger Stelle, macht das neue System besonders interessant, zumal auf der Traverse 8 Kommissionen gebildet werden können. Z.B. ist es möglich, eine Kommission aus mehreren Paletten/Halbprodukten auf der Traverse 8 zu bilden und sie seitlich komplett an Montage-Arbeitsplätzen neben dem Regal abzugeben, so daß die Arbeitsplätze mit allen erforderlichen Teilen auf einmal beliefert werden können.

Mit der erfindungsgemäßen Lagereinrichtung wird zudem der wesentliche Vorteil erreicht, daß eine Anlieferung von verschiedenen Materialien, wie Stangen, Platten, Kleinteilen, über ein und denselben Rollgang an beliebiger Stelle in der Nähe des Regals möglich ist. Es besteht auch die Möglichkeit, das halbfertige Produkt in die Lagereinrichtung zurückzuverfahren, um es dort zu puffern bzw. zwischenzulagern.

Es sei noch anzumerken, daß sich für das Heben und Senken der Traverse 8 grundsätzlich verschiedene Hubsysteme eignen, die die Traverse 8 sicher führen, wie z.B. Scheren- Teleskop- und außengeführte Systeme.

**Patentansprüche**

1. Lagereinrichtung für unterschiedliches Lagergut, bestehend aus einem Regel (47) mit mehreren Lagerflächern (48) und einem Hebezeug (5) mit einer Traverse (8), die zur Ein- und Auslagerung des Lagergutes vor den Lagerfächern (48) vertikal verfahrbar ist, und über ihre Länge mehrere Lagergutaufnehmer (11) aufweist, die quer zur Traversenlängsrichtung in Lagerfächer (48) ein- und ausfahrbar sind, wobei die Lagergutaufnehmer wahlweise einzeln, zu mehreren oder alle gemeinsam über je eine zu-oder abschaltbare Kupplung (14) von einem Antrieb (12) ein- und ausfahrbar sind, dadurch gekennzeichnet, daß die Lagerfächer (48) des Regals (47) in Längsrichtung der Traverse (8) im Raster (A bis F) des kleinsten Lagerfaches (48) ausgeführt sind und das längste Lagerfach (48) für das längste unterzubringende Lagergut ein Mehrfaches der Länge des kleinsten Lagerfaches (48) ist, und daß die Traverse (8) im Abstandsbereich eines jeden Lagerfachrasters (A bis F) zwei oder mehrere Lagergutaufnehmer (11) aufweist, daß alle Lagergutaufnehmer (11) über die jeweilige Kupplung (14) von einem gemeinsamen Antrieb (12) mit sich in Längsrichtung der Traverse (8) erstreckender Welle (13) antreibbar sind, und daß die Traverse (8) für die Ein-und Auslagerung des Lagergutes in Traversenlängsrichtung mindestens einen Rollgang (49) aufweist, der an der Traverse (8) heb- und senkbar angeordnet ist und dessen Förderrollen zwischen den Lagergutaufnehmern (11) der Traverse (8) an einem Rahmen (36) angeordnet und abschnittsweise von einem Motor (43) antreibbar sind.

2. Lagereinrichtung nach Anspruch 1, dadurch gekennzeichnet, daß die Förderrollen (35) eines Abschnitts durch eine Elektrokupplung (45) und einen Kettentrieb (44) zuschaltbar sind.

3. Lagereinrichtung nach Anspruch 1 oder 2, dadurch gekennzeichnet, daß zum Heben und Senken der Förderrollen (35) ein dem Förderrollenrahmen (36) zugeordnetes Hebelgestänge (37) vorgesehen ist, das über einen bevorzugt als Hydraulikzylinder oder Exzenter ausgeführten Antrieb (40) verstellbar ist.

4. Lagereinrichtung nach einem der Ansprüche 1 bis 3, dadurch gekennzeichnet, daß die Lagergutaufnehmer (11) als Teleskopausleger ausgebildet sind.

5. Lagereinrichtung nach einem der Ansprüche 1 bis 4, dadurch gekennzeichnet, daß die Lagergutaufnehmer (11) nach zwei gegenüberliegenden Längsseiten der Traverse (8) in entgegengesetzten Richtungen ausfahrbar sind.

6. Lagereinrichtung nach einem der Ansprüche 1 bis 5, dadurch gekennzeichnet, daß der Lagergutaufnehmer (11) eine Zahnlatte (19) aufweist, die über mindestens ein Zahnrad (18) und eine mit der Welle (13) verbundene Kette oder einen Zahnriemen (15) antreibbar ist.

7. Lagereinrichtung nach einem der Ansprüche 1 bis 6, dadurch gekennzeichnet, daß der Lagergutaufnehmer (11) zur Lagesicherung stangenförmigen Lagergutes (25) eine Zähne (20) und Zahnlücken (21) aufweisende Auflagefläche aufweist.

8. Lagereinrichtung nach einem der Ansprüche 1 bis 7, dadurch gekennzeichnet, daß das aus vertikalen Ständern (1) und horizontalen Tragarmen (2) für die Lagerfächer (48) gebildete Regal (47) als Block ausgebildet und darüber das Hebezeug (5) horizontal verfahrbar ist, dessen in Regalgängen (G0 bis G3) des Regalblocks (47) vertikal verfahrbare Traverse (8) mittels an den Traversenenden angeordneten Querträgern (9) an außerhalb des Regalgangs (G0 bis G3) vorgesehenen vertikalen Stützen (4) bevorzugt über Rollen (10) geführt ist.

**Claims**

1. Storage device for different material to be stored, consisting of shelving (47) with a plurality of storage compartments (48) and a hoisting appliance (5) with a cross-beam (8), which is able to travel vertically in front of the storage compartments (48) for inserting and removing the material to be stored and over its length comprises several means (11) for receiving material to be stored, which can be introduced into and retracted from the storage compartments (48) transversely to the longitudinal direction of the cross-beam, the means for receiving the material to be stored being able to be introduced and retracted either individually, several at a time or all together in each case by way of a clutch (14) which can be engaged or disengaged, by a drive (12), characterised in that the storage compartments (48) of the shelving (47) in the longitudinal direction of the cross-beam (8) are constructed as a modular grid (A to F) of the smallest storage compartment (48) and the longest storage compartment (48) for the longest material to be stored is a multiple of the length of the smallest storage compartment (48) and that in the spacing range of each storage compartment grid (A to F), the cross-beam (8) comprises two or more means (11) for receiving material to be stored, that all the means (11) for receiving material to be stored can be driven by way of the respective clutch (14) by a common drive (12) with a shaft (13) extending in the longitudinal direction of the cross-beam (8) and that the cross-beam (8) for the introduction and removal of the material to be stored, in the longitudinal direction of the cross-beam, comprises at least one roller bed (49), which is arranged to be raised and lowered on the cross-beam (8) and whereof the conveying rollers are disposed on a frame (36) between the means (11) for receiving material to be stored of the crossbeam (8) and said rollers can be driven in sections by a motor (43).

2. Storage device according to Claim 1, characterised in that the conveying rollers (35) of one section can be switched on by an electric clutch (45) and a chain drive (44).

3. Storage device according to Claim 1 or 2, characterised in that provided for raising and lowering the conveying rollers (35) is a leverbar (37) associated with the conveyor roller frame (36), which leverbar can be moved by a drive (40) preferably constructed as a hydraulic cylinder or eccentric.

4. Storage device according to one of Claims 1 to 3, characterised in that the means (11) for receiving material to be stored are constructed as telescopic brackets.

5. Storage device according to one of Claims 1 to 4, characterised in that the means (11) for receiving goods to be stored can be extended in opposite directions towards two opposing longitudinal sides of the cross-beam (8).

6. Storage device according to one of Claims 1 to 5, characterised in that the means (11) for receiving goods to be stored comprise a toothed bar (19), which can be driven by way of at least one gear (18) and a chain or toothed belt (15) connected to the shaft (13).

7. Storage device according to one of Claims 1 to 6, characterised in that for ensuring the position of rod-like material (25) to be stored, the means (11) for receiving material to be stored comprise a support surface having teeth (20) and gaps (21).

8. Storage device according to one of Claims 1 to 7, characterised in that the shelving (47) formed from vertical uprights (1) and horizontal support arms (2) for the storage compartments (48) is constructed as a block and the hoisting appliance (5) is able to travel horizontally thereabove, whereof the cross-beam (8) able to travel vertically in shelving gangways (G0 to G3) of the shelving block (47) is guided by means of transverse supports (9) disposed on the ends of the cross-beams, on vertical supports (4) provided outside the shelving gangway (G0 to G3), preferably by way of rollers (10).

## Revendications

1. Dispositif de stockage pour des marchandises à stocker variées, comprenant un rayonnage (47) avec plusieurs casiers de stockage (48) et un engin de levage (5) avec une traverse (9) qui, pour l'emmagasinage et le retrait du stock de la marchandise entreposée, peut être déplacée verticalement devant les casiers de stockage (48) et présente sur sa longueur une pluralité de récepteurs de marchandises à stocker (11) qui peuvent être rentrés et sortis dans les casiers de stockage (48), transversalement à la direction longitudinale de la traverse, les récepteurs de marchandises à stocker pouvant être rentrés et sortis, au choix, individuellement, par plusieurs ou tous ensemble, par un entraînement (12) par l'intermédiaire de respectivement un dispositif d'accouplement (14) connectable ou déconnectable, **caractérisé en ce** que les casiers de stockage (48) du rayonnage (47) sont réalisés, dans la direction longitudinale de la traverse (8). dans la trame (A à F) du plus petit casier de stockage (48), que le casier de stockage (48) le plus long pour la marchandise à stocker la plus longue est égal à un multiple de la longueur du plus petit casier de stockage (48), que la traverse (8) comporte, dans la plage d'espacement de chaque trame de casier de stockage (A à F), deux récepteurs de marchandises à stocker (11) ou plus, que tous les récepteurs de marchandises à stocker (11) peuvent être entraînés, par l'intermédiaire du dispositif d'accouplement (14) respectif, par un entraînement commun (12) dont l'arbre (13) s'étend dans la direction longitudinale de la traverse (8), et que la traverse (8) est munie, pour l'emmagasinage et le retrait des marchandises, d'au moins un train de rouleaux (48) orienté dans la direction longitudinale de la traverse et pouvant être monté et descendu sur la traverse (8), les rouleaux de transport dudit train de rouleaux étant montés entre les récepteurs de marchandises (11) de la traverse (8) sur un cadre (38) et pouvant être entraînés par sections au moyen d'un moteur (43).

2. Dispositif de stockage selon la revendication 1, caractérisé en ce que les rouleaux de transport (35) d'une section peuvent être mis en circuit par un dispositif d'accouplement électrique (45) et par une transmission par chaîne (44).

3. Dispositif de stockage selon l'une des revendications 1 ou 2, caractérisé en ce que pour la montée et la descente des rouleaux de transport (35), il est prévu un mécanisme à leviers (37) associé au cadre (38) des rouleaux de transport et déplaçable par l'intermédiaire d'un système d'entraînement (40) réalisé de préférence sous la forme d'un cylindre hydraulique ou d'un excentrique.

4. Dispositif de stockage selon l'une des revendications 1 à 3, caractérisé en ce que les récepteurs de marchandises à stocker (11) sont conformés en bras télescopiques.

5. Dispositif de stockage selon l'une des revendications 1 à 4; caractérisé en ce que les récepteurs de marchandises à stocker (11) peuvent être sortis dans des directions opposées vers les deux grands côtés opposés de la traverse (8).

6. Dispositif de stockage selon l'une des revendications 1 à 5, caractérisé en ce que le récepteur de marchandises à stocker (11) comprend une crémaillère (19) laquelle peut être entraînée par l'intermédiaire d'au moins une roue dentée (18) et d'une chaîne ou d'une courroie dentée (15) rattachée à l'arbre (13).

7. Dispositif de stockage selon l'une des revendications 1 à 6, caractérisé en ce que le récepteur de marchandises à stocker (11) comprend une surface d'appui pourvue de dents (20) et de creux de dents (21) pour assurer le positionnement des marchandises en forme de barres (25).

8. Dispositif de stockage selon l'une des revendications 1 à 7, caractérisé en ce que le rayonnage (47) constitué de montants verticaux (1) et de bras de support horizontaux (2) pour les casiers de stockage (48) est conformé en bloc sur lequel peut être déplacé dans le sens horizontal l'engin de levage (5) dont la traverse (8) déplaçable verticalement dans les travées de rayonnages (G0 à G3) du bloc de rayonnage (47) est guidée au moyen de poutres transversales (9) montées sur les extrémités de la traverse, de préférence par l'intermédiaire de rouleaux (10), sur des supports verticaux (4) prévus à l'extérieur de la travée de rayonnages (G0 à G3).

FIG. 1

EP 0 268 965 B1

FIG. 2

EP 0 268 965 B1

FIG. 3

FIG. 4

FIG. 5

FIG. 6

FIG. 7